# EUROPÄISCHE PATENTANMELDUNG

(11) **EP 1 645 386 A1**
(43) Veröffentlichungstag der Anmeldung: **12.04.2006**
(21) Anmeldenummer: 05021583.9
(22) Anmeldetag: 03.10.2005
(51) Int. Cl.: B29C 44/12, B29C 47/10, B29C 44/00, B29C 44/42

(54) **Verfahren zur Herstellung von Leichtbauteilen**

(30) Priorität: 06.10.2004 EP 04405630
(71) Anmelder: Quadrant Plastic Composites AG, 5600 Lenzburg (CH)
(72) Erfinder: Baser, Burak, 4600 Olten (CH)
(74) Vertreter: Felder, Peter

(57) **Zusammenfassung**

Die Erfindung betrifft ein Verfahren zur Herstellung von Leichtbauteilen mit einer Dichte von 0,3 bis 0,9 g/cm3 aus faserverstärkten thermoplastischen Kunststoffen durch Einspritzen einer Thermoplastschmelze, die Verstärkungsfasern sowie ein chemisches Treibmittel enthält, in ein Formwerkzeug,
- wobei in einem Extruder ein thermoplastischer Kunststoff aufgeschmolzen und mit dem Treibmittel sowie mit Verstärkungsfasern einer Länge von mehr als 25 mm vermischt wird, wobei die Fasern durch Scherwirkung gebrochen werden, und
- wobei die Mischung in ein Formwerkzeug eingespritzt wird und dabei aufschäumt,
dadurch gekennzeichnet,
- dass das chemische Treibmittel in Form eines Konzentrats in dem Thermoplasten zugegeben wird, wobei die Menge an Treibmittel 1 bis 10 Gew.%, bezogen auf die Gesamtmenge an thermoplastischem Kunststoff beträgt, und
- dass das Formwerkzeug zwei Formhälften aufweist, die beim Einspritzen nicht gegeneinander verschoben werden, und
- dass die Fasern auf eine Länge von 2 bis 20 mm gebrochen werden.

## Beschreibung

Die Erfindung betrifft ein Verfahren zur Herstellung von Leichtbauteilen aus faserverstärkten thermoplastischen Kunststoffen durch Einspritzen einer Treibmittel und Verstärkungsfasern enthaltenden Thermoplastschmelze in ein Formwerkzeug.

Glasmattenverstärkte thermoplastische Kunststoffe (GMT) werden als flächige Halbzeuge vielfach zur Herstellung von Kunststoff-Fertigteilen, insbesondere im Automobilbau eingesetzt. Sie werden üblicherweise durch Schmelzeimprägnierung von Glasfasermatten hergestellt, indem man mehrere Lagen von Glasfasermatten, vorzugsweise auf einer Doppelbandpresse, laminiert. Dabei wird zwar ein gut verarbeitbares Halbzeug erhalten, aus dem durch Verpressen Fertigteile mit guten mechanischen Eigenschaften hergestellt werden können, das Verfahren ist aber technisch sehr aufwendig.

Eine Alternative zu dem Schmelzeimprägnierverfahren ist das D-LFT-Verfahren, bei dem verhältnismässig lange Glasfasern mit einer Thermoplastschmelze vermischt und durch eine Breitschlitzdüse ausgepresst werden. Ein besonders elegantes Verfahren zur Herstellung von D-LFT ist in der DE-A 43 30 860 beschrieben. Danach werden Endlos-Glasfasern zusammen mit Thermoplastschmelze einem Extruder zugeführt, dort durch Scherwirkung zerschnitten und mit der Thermoplastschmelze vermischt, die Mischung wird dann ausgepresst und zu einer flächigen Bahn geformt. Die Glasfasern werden dabei stark zerkleinert, so dass sie eine mittlere Länge von 2 bis 10 mm aufweisen.

Es ist ferner bekannt, dass man glasfaserverstärkte Formteile durch Spritzgiessen herstellen kann, indem man eine Thermoplastschmelze, die kurze (meist weniger als 1 mm lange) Glasfasern enthält, in ein Formwerkzeug einspritzt.

Leichtbauteile können auf diese Weise hergestellt werden, wenn man der Thermoplastschmelze Treibmittel zusetzt. Die mechanische Festigkeit solcher Teile ist jedoch für viele Anwendungs-zwecke unzureichend.

Die EP-A 825 010 beschreibt ein Verfahren zur Herstellung von Leichtbauteilen, bei dem man eine zweiteilige Form mit einer Glasfasern und Treibmittel enthaltenden Thermoplastschmelze füllt, die Schmelze an den Formwänden zur Bildung einer ungeschäumten Oberflächenschicht abkühlt, und dann den Formhohlraum durch Ausziehen der Formhälften gegeneinander vergrössert, so dass die Schmelze im Innern aufschäumen kann. Ähnliche Verfahren sind auch in DE-A 101 30 700 und US-A 6,010,656 beschrieben. Für einige Anwendungszwecke sind jedoch Bauteile mit offenzelliger Oberfläche ohne kompakte Haut erwünscht, ausserdem entsteht beim Schäumen durch Ausziehen der Formhälften eine unerwünschte ungleichmässige Schaumstruktur.

Die US-A 2003/ 0003 291 beschreibt ebenfalls ein Verfahren zur Herstellung von Leichtbauteilen, bei dem man in einem Extruder eine Glasfasern und Treibmittel enthaltende Thermoplastschmelze in eine zweiteilige Form einspritzt und die Schmelze an den Formwänden zur Bildung einer ungeschäumten Oberflächenhaut abkühlt. Das flüssige oder gasförmige Treibmittel wird durch eine separate Einspritzvorrichtung in den Mischextruder zugeführt. Die Verstärkungsfasern sollen in dem Leichtbauteil mindestens 25 mm lang sein. Es hat sich gezeigt, dass derart lange Fasern die Fliessfähigkeit der Schmelze beeinträchtigen.

Der Erfindung lag nun die Aufgabe zugrunde, ein einfaches Verfahren zur Herstellung von Leichtbauteilen mit guten mechanischen Eigenschaften aus faserverstärkten thermoplastischen Kunststoffen bereitzustellen, die eine über den gesamten Querschnitt gleichmässige Schaumstruktur aufweisen.

Diese Aufgabe wird erfindungsgemäss dadurch gelöst, dass man in einem Extruder einen thermoplastischen Kunststoff aufschmilzt und mit 1 bis 10 Gew.-% eines chemischen Treibmittels in Form eines Konzentrats und mit Verstärkungsfasern einer Länge von mehr als 25 mm vermischt, wobei die Fasern durch Scherwirkung auf eine mittlere Länge von 2 bis 20 mm gebrochen werden, und dann die Mischung in ein Formwerkzeug einspritzt, dessen Formhälften nicht gegeneinander verschoben werden, wobei die Mischung beim Einspritzen in die Form aufschäumt.

In der DE-A 198 59 472 ist das IMC-Verfahren zur Herstellung von mit Langfasern verstärkten Spritzgiessteilen beschrieben, bei dem in einem gleichsinnig drehenden Doppelschneckenextruder Thermoplastgranulat aufgeschmolzen und mit Endlosfasern vermischt wird, und die Schmelze über einen Spritzkolben in ein Werkzeug eingespritzt wird. Von Zumischen von Treibmitteln und von der Herstellung von geschäumten Leichtbauteilen ist nicht die Rede.

Geeignete Thermoplasten sind z.B. Polyolefine, Polyamide, gesättigte Polyester, Acrylnitril-Butadien-Styrol-Polymerisate und Polycarbonate. Besonders bevorzugt sind Propylenpolymerisate mit einem Schmelzindex MFI (2,16 kg/ 210°C) zwischen 1 und 200, insbesondere zwischen 2 und 50 g/10 min, vorzugsweise Homopolypropylen und Pfropfcopolymerisate des Propylens mit Acrylsäure oder Maleinsäure. Der Thermoplastschmelze werden 1 bis 10 Gew.-% eines chemischen Treibmittels, beispielsweise Azodicarbonamid, Trihydrazinotriazid, p-Toluolsulfonsäuresemicarbazid, p-Toluolhydrazid und Natriumbicarbonat in Form eines Thermoplast-Konzentrats zugesetzt. Diese Treibmittel setzen beim Erhitzen CO2 bzw. N2 frei. Das Treibmittel wird zusammen mit dem Glasfasereinzug als Konzentrat in den Extruder eingegeben. Die Thermoplastschmelze kann darüber hinaus die üblichen Zusatzstoffe, wie Stabilisatoren, Füllstoffe, Farbstoffe und Flammschutzmittel enthalten.

Als Extruder kann entweder ein Einschneckenextruder oder vorzugsweise ein Doppelschneckenextruder mit zwei gleichsinnig drehenden, kämmenden Schnecken, wie er in der DE-A 198 59 472 beschrieben ist, eingesetzt werden. Stromabwärts nach dem Einfüllen des Thermoplastgranulats werden die Verstärkungsfasern zugegeben. Bevorzugt sind Glasfasern, grundsätzlich können aber auch Kohlenstofffasern, Aramidfasern und Naturfasern verwendet werden. Die Fasern können als Schnittfasern mit einer Länge von mehr als 25 mm oder bevorzugt als Endlosfasern eingesetzt werden. Durch verhältnismässig schonende Scherung der Extruderschnecken werden die Fasern nur wenig gebrochen, je nach Stärke der Scherung auf mittlere Längen von 2 bis 20, insbesondere auf 4 bis 10 mm. Das Verhältnis Thermoplast zu Verstärkungsfasern ist so zu wählen, dass die fertigen Leichtbauteile vorzugsweise 10 bis 50, insbesondere 15 bis 30 Gew.-% Fasern enthalten.

Die flüssige Mischung kann dann entweder direkt in die Werkzeugform eingespritzt werden, oder man kann sie - in einer alternativen Ausführungsform der Erfindung - erst in einen Spritzkolben überführen, wie es in der DE-A 198 59 472 skizziert ist. Im Extruder selbst herrscht ein so hoher Druck, dass die Treibmittel sich zwar aufgrund der dort herrschenden hohen Temperaturen zersetzen, aber noch keine Gasentwicklung und damit noch kein Schäumen erfolgt. Dies geschieht erst bei Druckverminderung hinter der Einspritzdüse und im Formwerkzeug. Beim Einspritzen der flüssigen Mischung in die Form darf diese natürlich nicht ganz voll gefüllt werden, da sonst kein Aufschäumen erfolgen kann. Die Form wird vorzugsweise zu 25 bis 80 %, insbesondere zu 30 bis 70 % gefüllt. Durch ein- oder beidseitiges Hinterspritzen in der Form kann die Oberfläche des Formteils beliebig gestaltet werden, z.B. mit einer Dekorschicht versehen werden. Bevorzugt sind aber Leichtbauteile, die keine zellfreie Aussenhaut aufweisen. Nach beendetem Schäumvorgang wird die Form abgekühlt und die fertigen Leichtbauteile können entnommen werden.

Je nach Treibmittelmenge und Füllgrad des Formwerkzeugs haben die Formteile eine Dichte von 0,3 bis 0,9 g/cm³, vorzugsweise von 0,4 bis 0,8 g/cm³. Die Spritzgussteile zeichnen sich durch ein verhältnismässig geringes Gewicht und durch gute mechanische und akustische Eigenschaften aus. Sie können z.B. im Automobilbau als Geräuschkapseln und zum Unterbodenschutz verwendet werden.

## Patentansprüche

1. Verfahren zur Herstellung von Leichtbauteilen mit einer Dichte von 0,3 bis 0,9 g/cm³ aus faserverstärkten thermoplastischen Kunststoffen durch Einspritzen einer Thermoplastschmelze, die Verstärkungsfasern sowie ein chemisches Treibmittel enthält, in ein Formwerkzeug,
- wobei in einem Extruder ein thermoplastischer Kunststoff aufgeschmolzen und mit dem Treibmittel sowie mit Verstärkungsfasern einer Länge von mehr als 25 mm vermischt wird, wobei die Fasern durch Scherwirkung gebrochen werden, und
- wobei die Mischung in ein Formwerkzeug eingespritzt wird und dabei aufschäumt,
**dadurch gekennzeichnet,**
- **dass** das chemische Treibmittel in Form eines Konzentrats in dem Thermoplasten zugegeben wird, wobei die Menge an Treibmittel 1 bis 10 Gew.%, bezogen auf die Gesamtmenge an thermoplastischem Kunststoff beträgt, und
- **dass** das Formwerkzeug zwei Formhälften aufweist, die beim Einspritzen nicht gegeneinander verschoben werden, und
- **dass** die Fasern auf eine Länge von 2 bis 20 mm gebrochen werden.

2. Verfahren nach Anspruch 1, **dadurch gekennzeichnet, dass** die Leichtbauteile keine zellfreie Aussenhaut aufweisen.

3. Verfahren nach Anspruch 1, **dadurch gekennzeichnet, dass** man beim Einspritzen der Mischung in das Formwerkzeug dieses nur teilweise, vorzugsweise zu 25 bis 80 % füllt.

4. Verfahren nach Anspruch 1, **dadurch gekennzeichnet, dass** der Extruder ein gleichsinnig drehender Doppelschneckenextruder ist.

5. Verfahren nach Anspruch 1, **dadurch gekennzeichnet, dass** der Thermoplast ein Propylenpolymerisat ist.

6. Verfahren nach Anspruch 1, **dadurch gekennzeichnet, dass** die Verstärkungsfasern Endlos-Glasfasern sind.

7. Verfahren nach Anspruch 1, **dadurch gekennzeichnet, dass** das chemische Treibmittel zusammen mit den Verstärkungsfasern zugegeben wird.

8. Verfahren nach Anspruch 1, **dadurch gekennzeichnet, dass** die Treibmittel und Verstärkungsfasern enthaltende Thermoplastschmelze direkt in das Formwerkzeug eingespritzt wird.

9. Verfahren nach Anspruch 1, **dadurch gekennzeichnet, dass** die Treibmittel und Verstärkungsfasern enthaltende Thermoplastschmelze erst in einen Spritzkolben überführt und daraus in das Formwerkzeug eingespritzt wird.
